# EUROPÄISCHE PATENTSCHRIFT

(11) **EP 0 547 299 B1**
(45) Veröffentlichungstag und Bekanntmachung des Hinweises auf die Patenterteilung: **27.03.1996**
(21) Anmeldenummer: 92114105.7
(22) Anmeldetag: 19.08.1992
(51) Int. Cl.: G01C 19/16, F16C 27/04

(54) **Lagersitz für ein Radiallager in einem beschleunigungsfesten Kreisel**
Bearing mount for a radial bearing in an acceleration-resistant gyroscope
Montage de roulements pour un palier radial dans un gyroscope résistant aux accélérations

(30) Priorität: 14.12.1991 DE 4141312
(43) Veröffentlichungstag der Anmeldung: 23.06.1993
(73) Patentinhaber: Daimler-Benz Aerospace Aktiengesellschaft, D-81663 München (DE)
(72) Erfinder: Gruber, Ernst, W-8000 München 83 (DE)

(56) Entgegenhaltungen:
- DE-A- 3 626 626
- DE-C- 3 014 480
- US-A- 3 802 275
- US-A- 4 722 618
- US-A- 5 044 785
- Manufacturing Technology Note, US Army Materiel Development and Readiness Command Office of Manufacturing Technology, Alexandria, Virginia, USA, Report Number T-79-75, A.Rogers: "A Gimbal That Resists High-g Forces", February 1982.

## Beschreibung

### Lagersitz für ein Radiallager in einem beschleunigungsfesten Kreisel

Die Erfindung betrifft einen Lagersitz für ein Radiallager in einem beschleunigungsfesten Kreisel, auf welches eine kurzzeitige beschleunigungsbedingte Kraft senkrecht zur Drehachse einwirkt, mit einem elastischen, in radialer Richtung auf das Radiallager wirkenden Element.

Ein entsprechender Lagersitz ist aus der DE 30 14 480 C1 bekannt, bei welchem das Radiallager in einem Ring aus elastischem Material eingebettet ist, so daß ein derart gelagerter Kreiselläufer oder ein Kreiselrahmen im Falle des Einwirkens großer Beschleunigungen seitlich ausweichen kann und somit die Beschleunigungskräfte nicht unmittelbar auf die empfindlichen Lagerelemente einwirken. Es hat sich gezeigt, daß aufgrund einer durch unvermeidbare Federhysteresis bedingten Verformung des elastischen Materials oder verbleibender Beschleunigungskräfte oder Schwingungen, z.B. während der Flugphase eines mit einem derartigen Kreisel ausgestatteten Flugkörpers, sich die Drehachsen des Kreisels nicht mehr exakt in ihrer ursprünglichen Ruheposition befinden können, so daß Winkelfehler und dadurch erhöhte Reibungsmomente im Kreisel auftreten.

Eine ähnliche elastische Lagerung für einen Kreisel ist auch aus "Manufacturing Technology Note", Feb. 1982, T-79-75 bekannt, bei welcher Kreiselrahmen und -rotor nach einem Raketenstart durch Verzögerungs- und Suspensionsfederkräfte wieder in die ursprüngliche Lage gebracht werden sollen. Bei einer aus der US-A-3802275 bekannten Kreisellagerung wird der Kreiselläufer vor dem Abschuß durch einen Scherstift gesichert und dadurch das in einem becherförmigen Ringbehälter gehaltene Kugellager entlastet.

Eine ähnliche Einrichtung ist aus der US-A-5 044 785 bekannt, welche einen integral geformten ringförmigen Plastiklagerisolator für ein Kugellager beschreibt. Aus der US-A-4 722 618 ist eine lagerstützende Einrichtung für eine Propellerwelle bekannt, welche drei bogenförmige Anschläge aus einem elastomerischen Material, z.B. Gummi aufweist, die ein die Propellerwelle umgebendes Lager an drei Stellen seines Umfanges stützen. Ein spielfreies Wälzlager mit örtlicher Vorspannung ist aus der DE-A 3 626 626 bekannt, welche eine äußere Umhüllung als elastische Muffe sowie einen Mehrbereichskäfig für die Vorspannung aufweist.

Es ist Aufgabe der vorliegenden Erfindung, einen Lagersitz für ein Radiallager in einem beschleunigungsfesten Kreisel, insbesondere für Flugkörper, zu schaffen, bei dem die vorgenannten Nachteile nicht auftreten.

Diese Aufgabe wird durch einen nach den Merkmalen des Patentanspruchs 1 ausgebildeten Lagersitz gelöst.

Die Erfindung geht von der Voraussetzung aus, daß zur Erreichung der Beschleunigungsfestigkeit von Kreiseln in vielen Fällen, insbesondere für die Abschußphase von Flugkörpern, nur eine Beschleunigungsrichtung in Betracht gezogen werden muß. Andererseits treten jedoch gerade beim Abschuß eines Flugkörpers, vor allem aus Rohrwaffen, extrem hohe Beschleunigungen auf (> 10000g), so daß ein wirkungsvoller Schutz der empfindlichen Kreiselläuferlager bzw. kardanischen Aufhängungen der Kreiselrahmen beim Start unumgänglich ist, wobei der Aufwand jedoch möglichst gering sein soll.

Die erfindungsgemäß vorgesehene Konstruktion, bei der das Radiallager von einem Stützring umgeben ist, welcher seinerseits in einer Halbschale gelagert wird und mittels einer Feder in die Halbschale hineingedrückt wird bewirkt, daß das Lager auch nach einer radialen Auslenkung aus seinem Lagersitz wieder exakt in die ursprüngliche Position zurückfindet und dort mit definierter Kraft gehalten wird. Weiterhin kann sich das Radiallager in seinem Lagersitz axial bewegen, da die Feder nicht direkt auf dieses wirkt.

Die vorteilhafterweise vorgesehene Verwendung einer ovalen Ringfeder ermöglicht zum einen große Haltekräfte und zum anderen relativ große Federlängen bei kleinem Bauvolumen, wodurch Federbrüche, verursacht durch die enormen Beschleunigungskräfte, vermieden werden.

Die Erfindung wird im folgenden anhand des in den Figuren dargestellten Ausführungsbeispieles näher erläutert. Es zeigen:
- Fig. 1: einen Querschnitt durch einen Lagekreisel und
- Fig. 2: einen radialen Schnitt durch das Lager des inneren Kreiselrahmens gemäß Fig. 1.

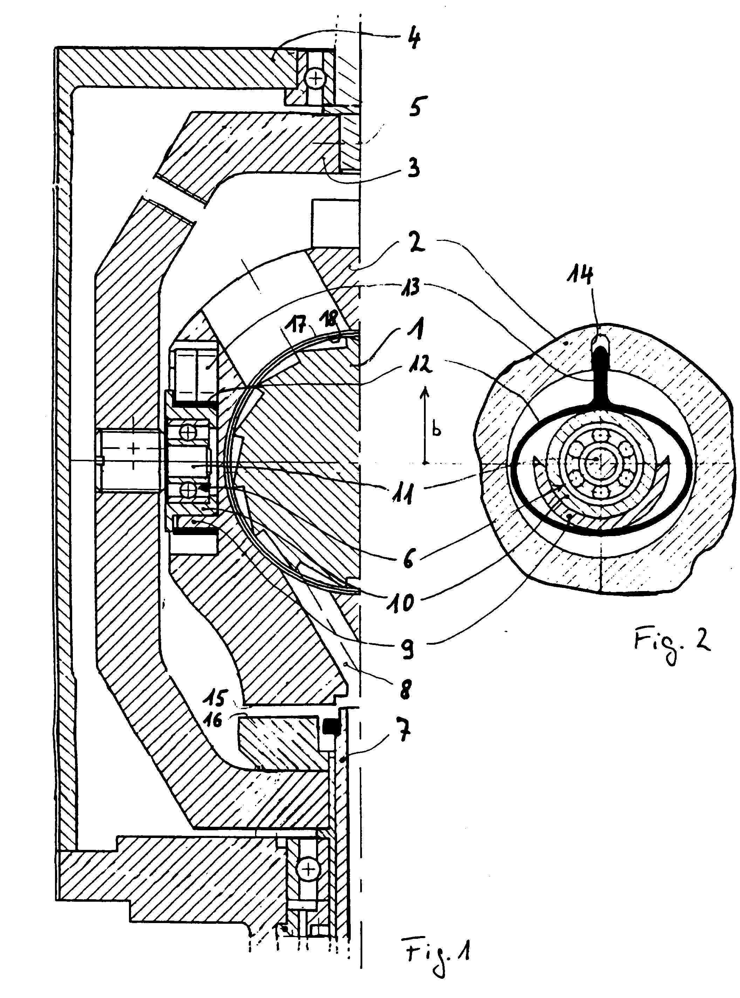

Der in Fig. 1 zur Hälfte dargestellte Lagekreisel weist einen Kreiselläufer 1, einen inneren Rahmen 2 sowie einen äußeren Rahmen 3 auf. Der äußere Kreiselrahmen 3 ist in einem Gehäuse 4 drehbar gelagert, wobei die Drehachse 5 gleichzeitig die Rollachse eines nicht dargestellten Flugkörpers ist.

Beim Abschuß des Flugkörpers wirken über das Gehäuse 4 und den äußeren Kreiselrahmen 3 Beschleunigungskräfte auf das Lager 6 des inneren Rahmens 2 und über diesen auf das nicht dargestellte Lager des Kreiselläufers 1. Die Beschleunigungsrichtung ist dabei mit dem Pfeil b angedeutet. Der innere Kreiselrahmen 2 ist während der Abschußphase durch ein verschiebbares, sog. Gasleitrohr 7 verriegelt, durch welches ein Treibgas in den Einlaßkanal 8 des Kreiselrahmens 2 strömt und den Kreiselläufer 1 antreibt. Nach Abschluß der Antriebsphase wird das Gasleitrohr 7 zurückgezogen und dabei der innere Kreiselrahmen 2 freigegeben. Der äußere Kreiselrahmen 3 ist dabei während der gesamten Phase zusammen mit dem Gasleitrohr 7 um die Achse 5 frei drehbar.

Der Lagersitz für das Radiallager 6 des inneren Kreiselrahmens 2 besteht im wesentlichen aus einer zylinderförmigen, fest mit dem Kreiselrahmen 2 verbundenen Halbschale 9 (s. Fig. 2), in welcher ein Stützring 10 paßgenau eingebettet ist. Das Radiallager 6 ist axial in diesen Stützring 10 einschiebbar. In dem Innenring des Radiallagers 6 steckt paßgenau ein Lagerzapfen 11, der durch den äußeren Kreiselrahmen 3 einschraubbar ist.

Der Stützring 10 wird in die Halbschale 9 mittels einer ovalen Ringfeder 12 hineingedrückt, wobei diese Ringfeder 12 sowohl den Stützring 10 als auch die Halbschale 9 umschlingt. Weiterhin weist die Ringfeder 12 einen Zapfen 13 auf, welcher in eine Nut 14 des inneren Kreiselrahmens 2 paßt und darin längsverschiebbar ist, jedoch eine Drehung der Feder verhindert.

Im Falle einer großen, von außen über das Gehäuse einwirkenden Beschleunigungskraft wird durch den Lagerzapfen 11 eine Kraft in Richtung des Pfeiles b auf das Radiallager 6 ausgeübt. Überschreitet diese Kraft die Federkraft der Ringfeder 12, so heben das Radiallager 6 und der Stützring 10 aus der Halbschale 9 ab. Der dadurch entstehende radiale Versatz zwischen den Kreiselrahmen 2 und 3 wird durch zwei Anschlagflächen 15 und 16 begrenzt, wobei beim Anschlag dieser beiden Flächen das Radiallager 6 von Beschleunigungskräften, die über einen Grenzwert hinausgehen, entlastet ist.

Bei Rückgang der Beschleunigungskräfte wird der Stützring 6 durch die Feder 12 zusammen mit dem Radiallager 6 wieder in die Lagerschale gedrückt, so daß die Drehachse des Radiallagers 6 wieder exakt ihre ursprüngliche Lage einnimmt.

In gleicher Weise, wie der Innenrahmen 2 gegenüber dem äußeren Rahmen 3 gelagert ist, kann auch der Kreiselläufer 1 gegenüber dem inneren Kreiselrahmen 2 gelagert sein. Eine Begrenzung der radialen Auslenkung bei großen Beschleunigungen findet dabei durch zwei zylindrische Anlaufflächen 17 und 18 auf der Innenseite des Kreiselrahmens 2 bzw. am Außenumfang des Kreiselläufers 1 statt.

## Patentansprüche

1. Lagersitz für ein Radiallager (6) in einem beschleunigungsfesten Kreisel, auf welches eine kurzzeitige beschleunigungsbedingte Kraft senkrecht zur Drehachse einwirkt, mit einem elastischen, in radialer Richtung auf das Radiallager (6) wirkenden Element (12), gekennzeichnet durch folgende Merkmale:
a) das Radiallager (6) ist von einem Stützring (10) umgeben, in welchen es axial einschiebbar ist,
b) der Lagersitz weist die Form einer zylindrischen Halbschale (9) auf, wobei die offene Seite der Halbschale (9) in die Richtung (b) ausgerichtet ist, in die aufgrund der Beschleunigung eine Kraft auf das Radiallager (6) ausgeübt wird,
c) das elastische Element (12) drückt mit definierter Federkraft den Stützring (10) in die Halbschale (9) derart, daß der Stützring (10) und das Radiallager (6) bei beschleunigungsbedingtem Überschreiten der Federkraft aus der Halbschale (9) abheben können.

2. Lagersitz nach Anspruch 1, **dadurch gekennzeichnet**, daß das elastische Element (12) als ovale Ringfeder ausgebildet ist, welche den Stützring (10) und die Halbschale (9) umfaßt.

3. Lagersitz nach Anspruch 2, **dadurch gekennzeichnet**, daß die Ringfeder (12) eine Drehsicherung (13) aufweist.

## Claims

1. A bearing seat for a radial bearing (6) in an acceleration-proof gyro, which is affected by a short-term accelerational force vertically to the rotary axis, comprising an elastic element which acts in a radial direction on the radial bearing (6), **characterized by** the following features:
a) the radial bearing (6) is surrounded by a support ring (10) into which it is axially insertable
b) the bearing seat has the shape of a cylindrical semi-cup (9), and the open side of the semi-cup (9) is oriented towards the direction (b) in which an accelerative force is exercised on the radial bearing (6);
c) the elastic element (12) pushes the support ring (10) with a defined springload into the semi-cup (9) in such a manner that the support ring (10) and the radial bearing (6) can lift off the semi-cup in the event of the spring force being exceeded due to acceleration.

2. A bearing seat according to Claim 1, **characterized in that** the elastic element (12) is designed as an oval annular spring which surrounds the support ring (10) and the semi-cup (9).

3. A bearing seat according to Claim 2, **characterized in that** the annular spring (12) is provided with a rotational lock (13).

## Revendications

1. Support de palier pour le montage d'un palier radial (6) dans un gyroscope résistant aux accélérations, soumis à une force de courte durée résultant de l'accélération qui agit perpendiculairement à l'axe de rotation, avec un élément (12) qui agit dans la direction radiale sur le palier radial (6), caractérisé par les caractéristiques suivantes:
a) le palier radial (6) est entouré d'une bague d'appui (10) à l'intérieur de laquelle il peut se déplacer axialement,
b) le support de palier a la forme d'une demi-coquille (9) cylindrique, le côté ouvert de la demi-coquille (9) étant dirigé dans la direction (b) dans laquelle, par suite de l'accélération, une force est exercée sur le palier radial (9),
c) l'élément élastique (12) presse avec une force élastique déterminée la bague d'appui (10) dans la demi-coquille (9) de manière telle que la bague d'appui (10) et le palier radial (6) puissent se décoller de la demi-coquille (9) en cas de dépassement de la force élastique dû à l'accélération.

2. Support de palier selon la revendication 1, caractérisé par le fait que l'élément élastique (12) est agencé sous la forme d'un anneau élastique ovale qui entoure la bague d'appui (10) et la demi-coquille (9).

3. Support de palier selon la revendication 2, caractérisé par le fait que l'anneau élastique (12) comporte un moyen de blocage en rotation (13).
